# EUROPÄISCHE PATENTANMELDUNG

(11) **EP 2 071 682 A1**
(43) Veröffentlichungstag der Anmeldung: **17.06.2009**
(21) Anmeldenummer: 07024194.8
(22) Anmeldetag: 13.12.2007
(51) Int. Cl.: H01S 3/11, H01S 3/136, H01S 3/102

(54) **Verfahren zur Erstpulsoptimierung in gütegeschalteten Festkörperlasern sowie gütegeschalteter Festkörperlaser**

(71) Anmelder: Trumpf Laser Marking Systems AG, 7214 Grüsch (CH)
(72) Erfinder: Zimer, Hagen, Dr., 07745 Jena (DE); Kruse, Dietmar, Dr., 7208 Malans (CH)
(74) Vertreter: Kohler Schmid Möbus

(57) **Zusammenfassung**

Die Erfindung betrifft ein Verfahren zum Erzeugen eines aus mehreren Einzelpulsen (3) bestehenden Pulszuges (2) mit einer gewünschten Pulseigenschaft der Einzelpulse (3) mittels eines gütegeschalteten Festkörperlasers (1), der einen Modulator (9) zum Beeinflussen der Pulseigenschaft der Einzelpulse (3) aufweist, mit folgenden Verfahrensschritten:
- Erzeugen der Einzelpulse (3) eines Pulszuges (2) mit einer Pulseigenschaft durch Anlegen eines zeitlichen Anfangsmodulationssignals (16a) an den Modulator (9);
- Detektieren der Pulseigenschaft der Einzelpulse (3) des erzeugten Pulszuges (2), Generieren eines modifizierten Modulationssignals (16) auf der Basis der detektierten und der gewünschten Pulseigenschaft sowie Erzeugen eines Pulszuges (2) mit einer modifizierten Pulseigenschaft durch Anlegen des modifizierten Modulationssignals (16) an den Modulator (9);
- Wiederholen des letzten Verfahrensschrittes, bis ein vorbestimmtes Abbruchkriterium bezüglich eines optimalen Modulationssignals (16) erfüllt ist; und
- Erzeugen eines Pulszuges (2) mit der gewünschten Pulseigenschaft seiner Einzelpulse (3) durch Anlegen des optimalen Modulationssignals (16) an den Modulator (9).

Die Erfindung betrifft auch einen zum Durchführen dieses Verfahrens geeigneten gütegeschalteten Festkörperlasers (1).

## Beschreibung

Die vorliegende Erfindung betrifft ein Verfahren zum Erzeugen eines aus mehreren Einzelpulsen bestehenden Pulszuges mit einer gewünschten Pulseigenschaft der Einzelpulse mittels eines gütegeschalteten Festkörperlasers sowie einen zum Durchführen dieses Verfahrens geeigneten gütegeschalteten Festkörperlaser.

Gepulste, gütegeschaltete Festkörperlaser sind aus vielen Bereichen der Lasermaterialbearbeitung nicht mehr wegzudenken. Wesentlicher Bestandteil solcher Bearbeitungssysteme ist die eigentliche Laserstrahlquelle, bestehend aus einem Resonator, einem laseraktiven Medium und einem Güteschalter. Als laseraktive Medien werden Wirtskristalle (YAG, YVO₄, YLF) verwendet, die mit Seltenen-Erden-lonen (Nd³⁺, Yb³⁺, Er³⁺) dotiert sind. Solche Kristalle zeichnen sich durch Laserübergänge aus, die eine Fluoreszenzlebensdauer von einigen zehn Mikrosekunden bis hin zu wenigen Millisekunden besitzen. Sie sind dadurch in der Lage, in gütegeschalteten Laserresonatoren die in das Lasermedium hineingepumpte Energie während des Zustandes niedriger Güte zu speichern. Dieser Vorgang wird als Inversionsaufbau bezeichnet. Bei der Umschaltung von der niedrigen auf eine hohe Resonatorgüte baut sich die Inversion schlagartig ab und die gespeicherte Energie wird in Form eines kurzen Pulses abgegeben. Als Güteschalter kommen in der Regel akustooptische Modulatoren (AOM) oder elektrooptische Modulatoren (EOM) zum Einsatz. Pulsenergie und Pulsspitzenleistung hängen davon ab, wie viel Energie während des Zustandes niedriger Güte in das Lasermedium hineingepumpt wurde, und damit von der Dauer des Zustandes niedriger Güte. Der Umschaltvorgang des Resonators von niedriger zu hoher Güte kann repetitiv erfolgen, so dass der Laser einen Pulszug aus kurzen Pulsen (mit Pulsdauern von wenigen Nanosekunden bis einigen Mikrosekunden) entsprechend der Schaltfrequenz emittiert. Die Dauer des Zustandes niedriger Güte ist zwischen den einzelnen Pulsen des Pulszuges konstant, weshalb die Pulse nahezu identische Energie und Spitzenleistung besitzen. Dieses gilt allerdings nicht für den ersten Puls des Pulszuges. Vor diesem befand sich der Laserresonator deutlich länger im Zustand niedriger Güte, weshalb deutlich mehr Energie in das laseraktive Medium gepumpt wurde. Der erste Puls eines Pulszuges enthält deshalb in der Regel deutlich mehr Energie und eine deutlich höhere Spitzenleistung als die Folgepulse.

Insbesondere bei der Laserbeschriftung mit gütegeschalteten Festkörperlasern werden für ein gutes Bearbeitungsergebnis in der Regel homogene Pulse gleicher Pulsspitzenleistung und gleicher Pulsenergie benötigt. Die beispielsweise bei der Vektormarkierung auftretenden Beschriftungspausen, z.B. bei einem Sprung vom Ende eines Vektors zum Beginn des nächsten, bedingen, dass der Laser statt eines kontinuierlichen Pulszuges viele zeitlich begrenzte Pulszüge emittieren muss. Die Überhöhung des jeweils ersten Pulses dieser Pulszüge ergibt bei vielen Beschriftungsanwendungen eine deutlich sichtbare Inhomogenität der Beschriftung.

Es sind bereits verschiedene Verfahren bekannt, um in gütegeschalteten Festkörperlasern die Überhöhung der Pulsenergie bzw. Pulsspitzenleistung des ersten Pulses eines Pulszuges zu vermeiden.
Besonders vorteilhaft ist ein Verfahren, bei dem der Güteschalter während der Emission der ersten Pulse nicht vollständig geöffnet wird. Dieses Verfahren wird in US 4,675,872 genauer beschrieben. Die ersten Pulse eines Pulszuges werden dabei kontrolliert abgeschwächt. Dieses wird dadurch erreicht, dass der Güteschalter (AOM, EOM) derart angesteuert wird, dass er während dieser ersten Pulse vom Zustand niedriger Güte nicht in den Zustand hoher Güte, sondern in Zustände mittlerer Güte schaltet. Im Zustand mittlerer Güte wird zwar ein Puls erzeugt, dieser hat jedoch verringerte Pulsenergie und Pulsspitzenleistung, da ihm der Resonator durch die verminderte Güte Verluste zufügt (z.B. in Form von Beugungsverlusten beim AOM). Bei diesem Verfahren lässt es sich in der Regel nicht erreichen, dass die im Laserkristall gespeicherte überschüssige Energie durch die Verluste während der Emission allein des ersten Pulses hinreichend abgebaut wird. Vielmehr verbleibt ein Teil der überschüssigen Energie im Laserkristall, so dass es erforderlich ist, weitere Folgepulse abzuschwächen. Pulsenergie und Pulsspitzenleistung der einzelnen Pulse hängen dabei kritisch von der jeweils eingestellten Güte ab, die z.B. beim AOM durch die Amplitude der am AOM anliegenden HF-Leistung vorgegeben ist. Die entsprechenden Ansteuerungsparameter des Güteschalters, die eine optimale Abschwächung der ersten Pulse generieren, sind nicht nur laserspezifisch, sondern hängen vom Arbeitspunkt (Pumpleistung, Repetitionsrate, Puls-Pause-Verhältnis) des Lasers ab. Die Ermittlung dieser Ansteuerungsparameter ist aufwändig und problematisch.
Ein alternatives Verfahren beruht darauf, die Pumpleistung vor der Emission der einzelnen Pulse so anzusteuern, dass die Pulse die jeweils gewünschte Pulsenergie bzw. Pulsspitzenleistung erhalten. Die Auswirkung der Änderung der Pumpleistung auf Pulsenergie und Pulsspitzenleistung hängt auch hier kritisch vom Arbeitspunkt (Pumpleistung, Repetitionsrate, Puls-Pause-Verhältnis) des Lasers ab. Die Ermittlung geeigneter Ansteuerungsparameter ist auch hier aufwändig und problematisch.

Bei diesen bekannten Verfahren ist die Ermittlung der Ansteuerungsparameter für die Erstpulsoptimierung "quasi-statisch", d.h. diese Parameter sind entweder fix vorgegeben oder werden anhand des Beschriftungsergebnisses manuell optimiert. Alternativ kann auch eine Liste verschiedener Parametersätze zur Verfügung gestellt werden, aus der die Gerätesoftware oder der Anwender den geeignetsten auswählt. Die bekannten Verfahren sind aus den folgenden Gründen unbefriedigend: Erstens wird der Laser in der Anwendung bei variierenden Pumpleistungen, Repetitionsraten und Puls-Pause-Verhältnissen betrieben, so dass es einer häufigen manuellen Optimierung bedarf bzw. eine sehr große Zahl von Parametersätzen zur Verfügung gestellt und der richtige ausgewählt werden muss. Zweitens kann die Erstpulsoptimierung von der Applikation abhängen, so dass ein Wechsel der Applikation eine manuelle Optimierung der Ansteuerungsparameter erforderlich macht bzw. eine noch größere Zahl an Parametersätzen zur Verfügung gestellt werden muss. Drittens gilt der optimierte Parametersatz nur für den Zustand zum Zeitpunkt der Optimierung; bei einer späteren Veränderung der Lasergüte (Verschlechterung von Optiken, Degradation der Pumpquelle, im Falle des AOM Degradation des HF-Treibers etc.) stimmen die optimierten Parameter unter Umständen nicht mehr und ein manuelles Eingreifen ist erforderlich. Viertens müssen die verschiedenen Parametersätze in der Regel für jedes Gerät individuell bestimmt werden, da die optimalen Parameterwerte aufgrund von Komponentenstreuung und Justageabweichungen zwischen einzelnen Geräten deutlich unterschiedlich sein können.

In gewissen Fällen ist es andererseits erwünscht, dass der erste Puls bzw. die ersten Pulse nicht dieselbe Pulsenergie bzw. Pulsspitzenleistung besitzen wie die Folgepulse. Beispielsweise kann bei einer Vektormarkierung eine geringere Pulsenergie von Vorteil sein, um den dynamischen Beschleunigungsvorgang der Spiegelbewegung zum Beginn eines Vektors zu kompensieren.

Die Aufgabe der Erfindung besteht demgegenüber darin, ein Verfahren zum Erzeugen eines aus mehreren Einzelpulsen bestehenden Pulszuges mit einer gewünschten Pulseigenschaft der Einzelpulse, insbesondere mit einer gewünschten Pulsenergie bzw. Pulsspitzenleistung des oder der ersten Pulse des Pulszuges, mittels eines gütegeschalteten Festkörperlasers anzugeben sowie einen zum Durchführen dieses Verfahrens geeigneten gütegeschalteten Festkörperlaser bereitzustellen.

Diese Aufgabe wird erfindungsgemäß gelöst durch ein Verfahren zum Erzeugen eines aus mehreren Einzelpulsen bestehenden Pulszuges mit einer gewünschten Pulseigenschaft der Einzelpulse mittels eines gütegeschalteten Festkörperlasers, der einen Modulator zum Beeinflussen der Pulseigenschaft der Einzelpulse aufweist, mit folgenden Verfahrensschritten:
- Erzeugen der Einzelpulse eines Pulszuges mit einer Pulseigenschaft durch Anlegen eines zeitlichen Anfangsmodulationssignals an den Modulator;
- Detektieren der Pulseigenschaft der Einzelpulse des erzeugten Pulszuges, Generieren eines modifizierten Modulationssignals auf der Basis der detektierten und der gewünschten Pulseigenschaft sowie Erzeugen eines Pulszuges mit einer modifizierten Pulseigenschaft durch Anlegen des modifizierten Modulationssignals an den Modulator;
- Wiederholen des letzten Verfahrensschrittes, bis ein vorbestimmtes Abbruchkriterium bezüglich eines optimalen Modulationssignals erfüllt ist; und
- Erzeugen eines Pulszuges mit der gewünschten Pulseigenschaft seiner Einzelpulse durch Anlegen des optimalen Modulationssignals an den Modulator.

Erfindungsgemäß wird eine gezielte Einstellung der Pulsenergien bzw. Pulsspitzenleistungen des oder der ersten Pulse, d.h. eine Erstpulsoptimierung, ermöglicht. Die Erfindung vereinfacht nicht nur die Implementierung einer Erstpulsoptimierung in der Produktion von gütegeschalteten Festkörperlasern, sondern sie ermöglicht erst eine individuell auf variable Arbeitspunkte optimierte Erstpulsoptimierung. Außerdem gewährleistet diese Erfindung die Langzeitzuverlässigkeit der Erstpulsoptimierung bei der Applikation. Beides kann ohne zusätzliche aufwändige Messtechnik andernfalls nur durch kundenseitige zeitaufwändige manuelle Optimierung aufgrund des Bearbeitungsergebnisses erreicht werden, wobei diese Art der Optimierung neben dem erforderlichen Zeitaufwand als weiteren Nachteil die suboptimale Bearbeitung und damit in der Regel den Ausschuss zu bearbeitender Teile zur Folge hat.

Die Generierung des optimalen Modulationssignals erfolgt bevorzugt vollautomatisch mithilfe eines in einer geeigneten Steuerung oder Regelung hinterlegten Algorithmus, kann aber auch manuell erfolgen. Im letzteren Fall sind die Mittel zur Generierung und Detektion des Pulszuges und zur Einstellung des zeitlichen Modulationssignals vorhanden, es existiert jedoch kein Algorithmus, der aus dem detektierten Signal ein Modulationsmuster generiert. Vielmehr wird z.B. der Pulszug graphisch auf einem Monitor dargestellt oder eine die Pulseigenschaft des ersten Pulses oder der ersten Pulse des Pulszuges charakterisierende Größe wird z.B. als Zahlenwert bzw. Tabelle von Zahlenwerten ausgegeben, und auf Basis dieser Information optimiert der Anwender manuell das Modulationsmuster.

Bei gewissen Applikationen ist es vorteilhaft, dass die ersten Pulse eines Pulszuges nicht dieselbe Pulsenergie besitzen wie die Folgepulse. Es kann beispielsweise wünschenswert sein, die Energie der ersten Pulse eines Pulszuges relativ zu den Folgepulsen zu erniedrigen, um den Beschleunigungsvorgang der Scannerspiegel und den damit verbundenen höheren Energieeintrag pro Fläche zu kompensieren. Dieses kann der Bediener mittels entsprechender Skalierungsfaktoren dem Generierungsalgorithmus vorgeben. Dabei können entweder eine Zeitspanne und ein gemeinsamer Skalierungsfaktor oder die Zahl der Pulse und ein gemeinsamer Skalierungsfaktor oder separate Skalierungsfaktoren für einzelne Pulse vorgegeben werden.

Die gewünschte Pulseigenschaft der Einzelpulse kann beispielsweise ihre Pulsspitzenleistung oder ihre Pulsenergie sein. Um dabei den Einfluss von Schwankungen der Pulsspitzenleistungen bzw. Pulsenergien, die von Pulszug zu Pulszug auftreten, zu minimieren, ist es vorteilhaft, mehrere Pulszüge zu detektieren und für jeden einzelnen Puls des Pulszuges den Mittelwert zu bilden und daraus das modifizierte Modulationssignal zu generieren. Die Detektion der Pulseigenschaft kann direkt oder indirekt, beispielsweise indem die Pulsdauer detektiert wird und von dieser auf die Pulsenergie oder auf die Pulsspitzenleistung rückgeschlossen wird, erfolgen.

Vorzugsweise wirkt der Modulator auf die Resonatorgüte oder auf die Pumpleistung des gütegeschalteten Festkörperlasers ein. Im ersteren Fall kann der Modulator beispielhaft der akustooptische Güteschalter des gütegeschalteten Festkörperlasers sein, der mittels eines zeitlichen HF-Leistungsmodulationssignals angesteuert wird. Wenn beispielsweise der erste Puls überhöht ist, wird je nach Stärke der Überhöhung in einem "ersten Anfangsversuch" der HF-Leistungswert je Puls so angepasst, dass die Pulsspitzenleistungen bzw. Pulsenergien gleich werden. Jeder Puls bekommt seinen ihm zugewiesenen HF-Leistungswert. Dieses zeitliche HF-Leistungsmuster wird nun wiederum an den Güteschalter geschickt, die Pulsspitzenleistungen bzw. Pulsenergien des sich ergebenden Pulszuges detektiert und von einem Steueralgorithmus verarbeitet, und das zeitliche HF-Leistungsmuster erneut modifiziert. Dieses wiederholt sich so lange, bis eine vernünftige Erstpulsoptimierung erfolgt ist. Letzteres kann dadurch definiert sein, dass ein festgelegtes Abbruchkriterium erfüllt ist, welches z.B. die maximale Abweichung einer Pulsspitzenleistung oder Pulsenergie von dem über alle Pulse gebildeten Mittelwert oder die maximale Varianz der Pulsspitzenleistungen bzw. Pulsenergien sämtlicher Pulse des Pulszuges sein kann.

Besonders bevorzugt wird vor dem Ausführen einer Materialbearbeitung mit einem aus mehreren Einzelpulsen bestehenden Pulszug für mindestens einen später bei der Materialbearbeitung auftretenden Arbeitspunkt des Festkörperlasers, insbesondere für alle später bei der Laserbearbeitung auftretenden Arbeitspunkte, das jeweils optimale Modulationssignal ermittelt. Der Festkörperlaser generiert je nach seinem Justagezustand oder seiner Resonatorgüte autark und adaptiv die geeigneten Ansteuerungsparameter zur Erstpulsoptimierung, nämlich diejenigen, die er gerade für die aktuelle Bearbeitung (z.B. Beschriftung) benötigt.

Es sind verschiedenste Algorithmen für die Erzeugung des Modulationssignals anwendbar. Ein einfaches Beispiel ist die sequentielle Optimierung der einzelnen Pulse: In einem ersten Schritt wird die Pulsspitzenleistung bzw. Pulsenergie des ersten Pulses durch Variation des ersten Modulationssignalwertes bzw. HF-Leistungswertes in geeigneter Weise auf den Mittelwert der Folgepulse angepasst. Anschließend geschieht dasselbe für den zweiten Puls mittels Variation des zweiten Modulationssignalwertes und so fort. Abgebrochen wird bei dem Puls, dessen Pulsspitzenleistung bzw. Pulsenergie trotz voller Modulation nicht mehr wesentlich vom Mittelwert der Folgepulse abweicht. Als weiteres Beispiel können Hill-Climbing-Algorithmen oder evolutionäre Algorithmen eingesetzt werden, z.B. genetische Algorithmen. Im letzteren Fall würden zunächst zufällige oder auch sinnvoll vorgegebene zeitliche Modulationssignalwerte bzw. HF-Leistungsmuster an den AOM gesendet und die resultierenden Pulszüge detektiert. Eine Generierungsvorrichtung, also eine Steuerung oder Regelung, nimmt eine Auswahl der besten Modulationssignalwerte bzw. HF-Leistungsmuster vor und versucht nun, diese evolutionär durch iterative Durchführung des oben beschriebenen Ablaufes zu optimieren.

Die Erfindung betrifft in einem weiteren Aspekt auch einen gütegeschalteten Festkörperlaser zum Erzeugen eines aus mehreren Einzelpulsen bestehenden Pulszuges mit einer gewünschten Pulseigenschaft der Einzelpulse, umfassend:
- einen Modulator zum Beeinflussen der Pulseigenschaft der Einzelpulse,
- einen Detektor zum Detektieren der Pulseigenschaft der Einzelpulse eines erzeugten Pulszuges,
- eine mit dem Detektor und mit dem Modulator verbundene Vorrichtung, die auf der Basis der jeweils detektierten und der gewünschten Pulseigenschaft ein modifiziertes Modulationssignal zum Ansteuern des Modulators generiert, und
- einen Datenspeicher, in dem das modifizierte Modulationssignal gespeichert wird.

Statt der Vorrichtung zur Generierung des modifizierten Modulationssignals kann der gütegeschaltete Festkörperlaser auch über eine Ausgabevorrichtung verfügen, um die detektierte Pulseigenschaft der Einzelpulse des erzeugten Pulszuges an einen Anwender auszugeben, und zusätzlich über eine Eingabevorrichtung, die es dem Anwender ermöglicht, das Modulationssignal zu modifizieren.

In einer bevorzugten Ausführungsform ist der Modulator durch einen Güteschalter des gütegeschalteten Festkörperlasers gebildet, insbesondere durch einen AOM oder EOM, der die Resonatorgüte des gütegeschalteten Festkörperlasers entsprechend der gewünschten Pulseigenschaft der einzelnen Pulse des aus dem Laserresonator ausgekoppelten Pulszuges beeinflusst. In einer anderen bevorzugten Ausführungsform ist der Modulator im Strahlengang des Pumplichts zwischen einer Pumplichtquelle und einem Laserresonator des gütegeschalteten Festkörperlasers vorgesehen und wirkt somit auf die Pumpleistung des gütegeschalteten

Festkörperlasers ein. Alternativ kann der Modulator auch die Pumplichtquelle selbst sein, deren Pumpleistung entsprechend der gewünschten Pulseigenschaft der einzelnen Pulse des aus dem Laserresonator ausgekoppelten Pulszuges moduliert wird.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Ausführungsform des erfindungsgemäßen gütegeschalteten Festkörperlasers mit Erstpulsoptimierung;
- Fig. 2a: einen aus mehreren Einzelpulsen bestehenden anfänglichen Pulszug mit einem überhöhten ersten Einzelpuls sowie das diesem Pulszug zugrunde liegende anfängliche HF-Leistungsmuster eines in Fig. 1 gezeigten akustooptischen Güteschalters; und
- Fig. 2b: einen gegenüber dem in Fig. 2a gezeigten Pulszug erstpulsoptimierten Pulszug sowie das diesem optimierten Pulszug zugrunde liegende optimale HF-Leistungsmuster des akustooptischen Güteschalters.

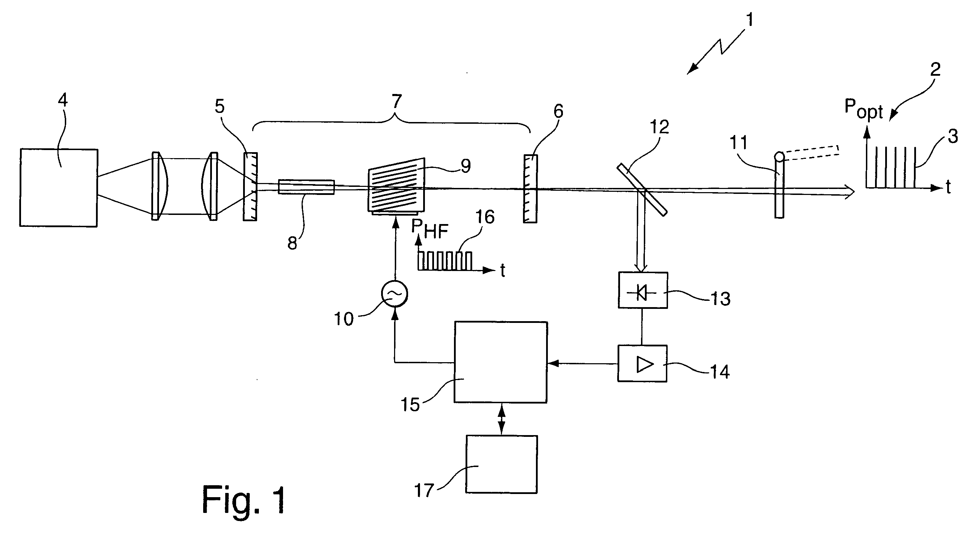

Der in **Fig. 1** gezeigte gütegeschaltete Festkörperlaser **1** dient zur Erzeugung eines Pulszuges **2,** der aus mehreren Einzelpulsen **3** mit möglichst konstanter Pulsenergie besteht.

Der Festkörperlaser 1 umfasst eine Pumpquelle **4,** einen durch einen für das Laserlicht hochreflektierenden Spiegel **5** und einen Auskoppelspiegel **6** definierten Laserresonator **7,** in dem ein von der Pumpquelle 4 gepumptes laseraktives Medium (Lasermedium) **8** und ein aktiver Güteschalter (Q-Switch) in Form eines akustooptischen Modulators (AOM) **9** angeordnet sind, sowie einen HF-Treiber **10** zum Ansteuern des AOM 9. Als Lasermedium 8 werden Wirtskristalle (YAG, YVO₄, YLF, GdVO₄) verwendet, die mit Seltenen-Erden-lonen (Nd³⁺, Yb³⁺, Er³⁺) dotiert sind. Solche Kristalle zeichnen sich durch Laserübergänge aus, die eine Fluoreszenzlebensdauer von einigen zehn Mikrosekunden bis hin zu wenigen Millisekunden besitzen, und sind dadurch in der Lage, in dem gütegeschalteten Laserresonator 7 die in das Lasermedium 8 hineingepumpte Energie während des Zustandes niedriger Güte zu speichern. Über den Auskoppelspiegel 6 wird der Pulszug 2 aus dem Laserresonator 7 ausgekoppelt und kann mittels eines Verschlusses (Shutter) **11** für eine Bearbeitung freigegeben werden.

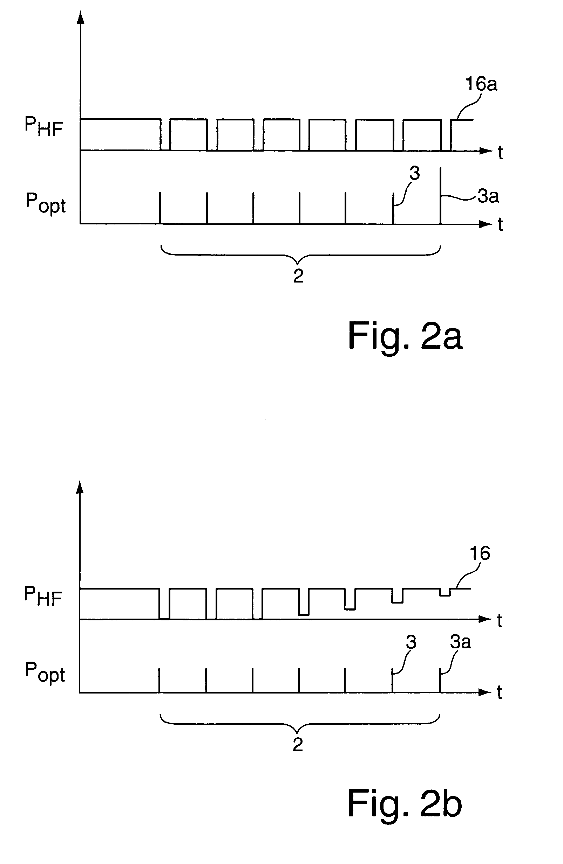

Vor dem Ausführen einer Bearbeitung (z.B. einer Beschriftung) wird der Festkörperlaser 1 bei einem später in der Bearbeitung auftretenden Arbeitspunkt (Pumpleistung, Repetitionsrate, Puls-Pause-Verhältnis) bei geschlossenem Verschluss 11 betrieben. Die Umschaltung der Resonatorgüte erfolgt zunächst mit voller Modulationstiefe. Dies erfolgt dadurch, dass die vom HF-Treiber 10 abgegebene und auf den AOM 9 übertragene HF-Leistung von ihrem Maximalwert (niedrige Güte des Resonators) auf Null (hohe Güte des Resonators) geschaltet wird. In **Fig. 2a** sind über der Zeit sowohl die optische Leistung **Pₒₚₜ** dieses aus mehreren Einzelpulsen 3 bestehenden Pulszuges 2 mit einem überhöhten ersten Einzelpuls **3a** als auch die HF-Leistung **P**_{HF}, also das diesem Pulszug zugrunde liegende anfängliche HF-Leistungsmuster **16a,** gezeigt.

Ein geringer Teil (z.B. 4%) des vom Festkörperlaser 1 emittierten Lichts wird über einen hier als Keilglas ausgebildeten Strahlteiler **12** auf einen hier als PIN-Photodiode ausgebildeten Detektor **13** gelenkt. Der Detektor 13 detektiert mittels einer nachgeordneten "Sample-and-Hold"-Schaltung **14** die Pulsspitzenleistungen aller Einzelpulse 3 dieses Pulszuges 2. Alternativ kann auch eine Integratorschaltung verwendet werden, um die Pulsenergien sämtlicher Pulse des Pulszuges zu detektieren. Diese detektierten Werte werden nun an eine Steuerung **15,** wie z.B. einen Mikrocontroller, übergeben. Um den Einfluss von Schwankungen der Pulsspitzenleistungen bzw. Pulsenergien, die von Pulszug zu Pulszug auftreten, zu minimieren, ist es vorteilhaft, mehrere Pulszüge 2 zu detektieren und für jeden einzelnen Puls des Pulszuges 2 den Mittelwert zu bilden. Die Steuerung 15 erkennt, dass die ersten Einzelpulse 3a des Pulszuges 2 überhöht sind, und passt je nach Stärke der Überhöhung in einem "ersten Versuch" die an den AOM 9 anzulegenden HF-Leistungswerte je Einzelpuls so an, dass die Pulsspitzenleistungen bzw. Pulsenergien gleich werden. Es erfolgt also während der ersten Einzelpulse keine volle Modulation der HF-Leistung mehr. Jeder Einzelpuls 3 bekommt seinen ihm zugewiesenen HF-Leistungswert. Dieses zeitliche Modulationssignal bzw. HF-Leistungsmuster **16** wird nun wiederum über den Treiber 10 an den AOM 9 angelegt, die Pulsspitzenleistungen bzw. Pulsenergien des sich ergebenden Pulszuges 2 detektiert und von der Steuerung 15 verarbeitet, und das zeitliche HF-Leistungsmuster 16 erneut modifiziert. Dieses wiederholt sich so lange, bis eine vernünftige Erstpulsoptimierung erfolgt ist. Letzteres kann dadurch definiert sein, dass ein festgelegtes Abbruchkriterium erfüllt ist, welches z.B. die maximale Abweichung einer Pulsspitzenleistung oder Pulsenergie von dem über alle Pulse gebildeten Mittelwert oder die maximale Varianz der Pulsspitzenleistungen bzw. Pulsenergien sämtlicher Pulse des Pulszuges sein kann. In **Fig. 2b** ist der gegenüber dem in Fig. 2a gezeigten Pulszug erstpulsoptimierte Pulszug 2, bei dem alle Einzelpulse 3 die gleiche Pulsspitzenleistung haben, sowie das diesem optimierten Pulszug zugrunde liegende optimale HF-Leistungsmuster 16 des AOM 9 gezeigt. Das so generierte optimale HF-Leistungsmuster 16 wird für den zugehörigen Arbeitspunkt in einem Datenspeicher **17** der Steuerung 15 gespeichert. Anschließend wird dieselbe Prozedur für alle weiteren später bei der Bearbeitung auftretenden Arbeitspunkte durchgeführt.

Für die Bearbeitung wird dann der Verschluss 11 geöffnet und ein Pulszug 2 mit der gewünschten Pulseigenschaft (z.B. Erstpulsabschwächung) erzeugt, indem das für die gewünschte Pulseigenschaft und den gewünschten Arbeitspunkt gespeicherte optimale Modulationssignal 16 an den AOM 9 angelegt wird.

Statt der Steuerung kann der gütegeschaltete Festkörperlaser auch über eine Ausgabevorrichtung verfügen, um die detektierte Pulseigenschaft der Einzelpulse des erzeugten Pulszuges an einen Anwender auszugeben, und zusätzlich über eine Eingabevorrichtung, die es dem Anwender ermöglicht, das Modulationssignal zu modifizieren. In diesem Fall bezeichnet die Bezugsziffer 15 die Ausgabe- und Eingabevorrichtungen.

## Patentansprüche

1. Verfahren zum Erzeugen eines aus mehreren Einzelpulsen (3) bestehenden Pulszuges (2) mit einer gewünschten Pulseigenschaft der Einzelpulse (3) mittels eines gütegeschalteten Festkörperlasers (1), der einen Modulator (4; 9) zum Beeinflussen der Pulseigenschaft der Einzelpulse (3) aufweist, mit folgenden Verfahrensschritten:
- Erzeugen der Einzelpulse (3) eines Pulszuges (2) mit einer Pulseigenschaft durch Anlegen eines zeitlichen Anfangsmodulationssignals (16a) an den Modulator (4; 9);
- Detektieren der Pulseigenschaft der Einzelpulse (3) des erzeugten Pulszuges (2), Generieren eines modifizierten Modulationssignals (16) auf der Basis der detektierten und der gewünschten Pulseigenschaft sowie Erzeugen eines Pulszuges (2) mit einer modifizierten Pulseigenschaft durch Anlegen des modifizierten Modulationssignals (16) an den Modulator (4; 9);
- Wiederholen des letzten Verfahrensschrittes, bis ein vorbestimmtes Abbruchkriterium bezüglich eines optimalen Modulationssignals (16) erfüllt ist; und
- Erzeugen eines Pulszuges (2) mit der gewünschten Pulseigenschaft seiner Einzelpulse (3) durch Anlegen des optimalen Modulationssignals (16) an den Modulator (4; 9).

2. Verfahren nach Anspruch 1, **dadurch gekennzeichnet, dass** die gewünschte Pulseigenschaft der Einzelpulse (3) ihre Pulsspitzenleistung oder ihre Pulsenergie ist.

3. Verfahren nach Anspruch 1 oder 2, **dadurch gekennzeichnet, dass** das modifizierte Modulationssignal (16) auf der Basis von mehreren Pulszügen (2) generiert wird.

4. Verfahren nach einem der vorhergehenden Ansprüche, **dadurch gekennzeichnet, dass** der Modulator (4; 9) auf die Resonatorgüte (1) oder auf die Pumpleistung des gütegeschalteten Festkörperlasers (1) einwirkt.

5. Verfahren nach einem der vorhergehenden Ansprüche, **dadurch gekennzeichnet, dass** vor dem Ausführen einer Laserbearbeitung mit einem aus mehreren Einzelpulsen (3) bestehenden Pulszug (2) für mindestens einen später bei der Bearbeitung auftretenden Arbeitspunkt des Festkörperlasers (1), insbesondere für alle später bei der Laserbearbeitung auftretenden Arbeitspunkte, das jeweils optimale Modulationssignal (16) generiert und insbesondere gespeichert wird.

6. Verfahren nach einem der vorhergehenden Ansprüche, **dadurch gekennzeichnet, dass** das modifizierte Modulationssignal (16) vollautomatisch, d.h. ohne die Notwendigkeit eines manuellen Eingriffs, generiert wird.

7. Verfahren nach einem der vorhergehenden Ansprüche, **dadurch gekennzeichnet, dass** das modifizierte Modulationssignal (16) mithilfe einer sequentiellen Optimierung der einzelnen Pulse generiert wird.

8. Verfahren nach einem der vorhergehenden Ansprüche, **dadurch gekennzeichnet, dass** das modifizierte Modulationssignal (16) mithilfe eines evolutionären oder genetischen Algorithmus oder eines Hill-Climbing-Algorithmus generiert wird.

9. Verfahren nach einem der vorhergehenden Ansprüche, **dadurch gekennzeichnet, dass** zumindest ein, insbesondere mehrere optimale Modulationssignale (16) samt ihren zugehörigen Arbeitspunkten gespeichert werden.

10. Gütegeschalteter Festkörperlaser (1) zum Erzeugen eines aus mehreren Einzelpulsen (3) bestehenden Pulszuges (2) mit einer gewünschten Pulseigenschaft der Einzelpulse (3), umfassend:
- einen Modulator (4; 9) zum Beeinflussen der Pulseigenschaft der Einzelpulse (3),
- einen Detektor (13) zum Detektieren der Pulseigenschaft der Einzelpulse (3) eines erzeugten Pulszuges (2),
- eine mit dem Detektor (13) und mit dem Modulator (4; 9) verbundene Vorrichtung (15), die auf der Basis der jeweils detektierten und der gewünschten Pulseigenschaft ein modifiziertes Modulationssignal (5) zum Ansteuern des Modulators (4; 9) generiert, und
- einen Datenspeicher (17), in dem das modifizierte Modulationssignal (16) gespeichert wird.

11. Gütegeschalteter Festkörperlaser nach Anspruch 10, **dadurch gekennzeichnet, dass** der Detektor (13) dem Modulator (4; 9) im Strahlengang nachgeordnet ist.

12. Gütegeschalteter Festkörperlaser nach Anspruch 10 oder 11, **dadurch gekennzeichnet, dass** der Modulator durch einen Güteschalter (9) des gütegeschalteten Festkörperlasers (1) gebildet ist.

13. Gütegeschalteter Festkörperlaser nach Anspruch 10 oder 11, **dadurch gekennzeichnet, dass** der Modulator im Strahlengang des Pumplichts zwischen einer Pumplichtquelle (4) und einem Laserresonator (7) des gütegeschalteten Festkörperlasers (1) vorgesehen ist oder durch die Pumplichtquelle (4) selbst gebildet ist.

14. Gütegeschalteter Festkörperlaser nach einem der Ansprüche 10 bis 13, **dadurch gekennzeichnet, dass** in dem Datenspeicher (17) zumindest ein, insbesondere mehrere optimale Modulationssignale (16) samt ihren zugehörigen Arbeitspunkten gespeichert werden können.

15. Gütegeschalteter Festkörperlaser nach einem der Ansprüche 10 bis 14, **dadurch gekennzeichnet, dass** eine Ausgabevorrichtung (15) zur Visualisierung der detektierten Pulseigenschaft und eine Eingabevorrichtung (15) zur manuellen Modifizierung des Modulationssignals (16) vorgesehen sind.

16. Gütegeschalteter Festkörperlaser nach Anspruch 15, **dadurch gekennzeichnet, dass** die Ausgabevorrichtung (15) eine die Pulseigenschaft des ersten Einzelpulses bzw. der Einzelpulse eines Pulszuges charakterisierende Größe als Zahlenwert bzw. als Tabelle von Zahlenwerten ausgibt.
